# FASCICULE DE BREVET EUROPEEN

(11) **EP 3 250 446 B1**
(45) Date de publication et mention de la délivrance du brevet: **13.03.2019**
(21) Numéro de dépôt: 16700956.2
(22) Date de dépôt: 14.01.2016
(51) Int. Cl.: B62D 25/08

(54) **MODULE DE FACE AVANT DE VEHICULE AUTOMOBILE**
FRONTENDMODUL EINES KRAFTFAHRZEUGS
FRONT-END MODULE OF A MOTOR VEHICLE

(30) Priorité: 27.01.2015 FR 1550628
(43) Date de publication de la demande: 06.12.2017
(73) Titulaire: Valeo Systemes Thermiques, 78320 Le Mesnil Saint Denis (FR)
(72) Inventeur: HERLEM, Jean-Paul, 78180 Montigny Le Bretonneux (FR)
(74) Mandataire: Tran, Chi-Hai
(86) Numéro de dépôt international: PCT/EP2016/050612
(87) Numéro de publication internationale: WO 2016/120077

(56) Documents cités:
- FR-A1- 2 912 107
- US-A1- 2007 051 465
- US-A1- 2007 182 211

## Description

La présente invention concerne le domaine des modules de face avant de véhicules automobiles. Le document US 2007/0051465 A1 divulgue un module de face avant selon le préambule de la revendication 1.

Les modules de face avant sont des éléments de structure du véhicule qui constituent une armature apte à supporter divers équipements du véhicules tels que les projecteurs, les clignotants, le groupe moto-ventilateur ou la poutre de pare-chocs.

Les modules de face avant comprennent généralement des montants latéraux, aussi appelés jambages, destinés à être fixés au châssis du véhicule et une traverse fixée sur les montants.

Dans l'état de la technique, soit le module de face avant est réalisé d'une seule pièce, ce qui permet de faciliter son montage mais rend difficile son transport avant le montage du fait de son encombrement, soit le module de face avant comprend plusieurs pièces, notamment la traverse et les montants latéraux ce qui facilite leur transport mais dans ce cas, les différentes pièces doivent être fixées entre elles par exemple par des vis ce qui nécessite un banc de montage de manière à positionner les différentes pièces dans la bonne position pour pouvoir insérer les vis et les fixer les éléments entre eux.

Il apparaît donc nécessaire de trouver une solution permettant de surmonter au moins partiellement les inconvénients des différentes solutions de l'état de la technique et d'obtenir un module de face avant facilement transportable avant son montage sur le véhicule et dont le montage sur le véhicule est simple et permet une liaison efficace des éléments du module de face avant.

La présente invention a donc pour objet un module de face avant de véhicule automobile comprenant :
- deux montants latéraux aptes à être fixés au châssis du véhicule,
- au moins une traverse apte à être fixée sur les montants latéraux pour s'étendre selon la largeur du véhicule,
dans lequel les montants latéraux comprennent une tête de fixation apte à venir s'encastrer dans un logement complémentaire de la traverse.

La liaison d'encastrement permet de faciliter le montage de la traverse sur les montants.

Selon la présente invention, la tête de fixation comprend une face avant et une face arrière, le logement de la traverse comprend une face d'entrée et un fond et la section de la tête de fixation décroît entre sa face arrière et sa face avant de même que la section du logement décroît entre sa face d'entrée et son fond.

La section décroissante permet de faciliter l'introduction de la tête de fixation dans le logement et permet l'encastrement même lorsque les cotes sont approximatives.

Selon un aspect supplémentaire, la diminution de section est obtenue par des parois inclinées par rapport à la direction d'encastrement dont l'angle d'inclinaison est compris entre 5 et 20°.

Selon un aspect additionnel, la tête de fixation et le logement comprennent des moyens d'encliquetage aptes à bloquer le déplacement relatif de la traverse et du montant latéral dans la direction d'encastrement.

Selon un autre aspect, la tête de fixation comprend une lame flexible comprenant une protubérance externe et le logement comprend un emplacement complémentaire de sorte que la protubérance externe vient dans l'emplacement complémentaire lors de l'encastrement de tête de fixation dans le logement.

Selon un aspect supplémentaire, la tête de fixation et le logement comprennent une saillie et une rainure complémentaire qui s'étendent, pour l'une, de la face avant à la face arrière de la tête de fixation et, pour l'autre, de la face d'entrée au fond du logement.

La saillie et la rainure permettent de renforcer le maintien latéral de la traverse.

Selon un aspect additionnel ,la tête de fixation d'un montant latéral a une forme générale de T et le logement de la traverse comprend une paroi inférieure, ladite paroi inférieure comprenant une ouverture centrale qui s'étend entre la face d'entrée et le fond du logement et dans laquelle vient s'insérer la base du T de la tête de fixation lors de l'encastrement de la tête de fixation dans le logement.

La forme en T permet un maintien latéral et vertical de la traverse sur les montants

Selon un autre aspect, la saillie est située sur la paroi inférieure du logement au bord de l'ouverture centrale.

Selon un aspect supplémentaire, la paroi inférieure comprend deux saillies de forme parallélépipédique et situées de part et d'autre de l'ouverture centrale.

Selon un aspect additionnel, la tête de fixation comprend une face avant et une face arrière et dans lequel la tête de fixation comprend une structure creuse ouverte sur sa face arrière.

Selon un autre aspect, la tête de fixation comprend des nervures de renfort qui s'étendent entre la face avant et la face arrière de la tête de fixation.

Selon un aspect additionnel, le fond du logement et la tête de fixation comprennent au moins un trou apte à recevoir un élément de fixation, le trou de la tête de fixation venant en regard du trou du fond du logement lorsque la tête de fixation est encastrée dans le logement.

D'autres caractéristiques et avantages de l'invention apparaîtront dans la description qui va maintenant en être faite, en référence aux dessins annexés qui en représentent, à titre indicatif mais non limitatif, des modes de réalisation possibles.

Sur ces dessins:
- la figure 1 représente un schéma de la traverse et des montants latéraux d'un module de face avant selon un mode de réalisation de la présente invention ;
- la figure 2 représente un schéma d'un logement de la traverse ;
- la figure 3 représente un schéma de la tête de fixation d'un montant latéral ;
- la figure 4 représente un module de face avant à l'état assemblé.

Sur ces figures, les mêmes numéros de référence désignent des éléments ayant des fonctions identiques.

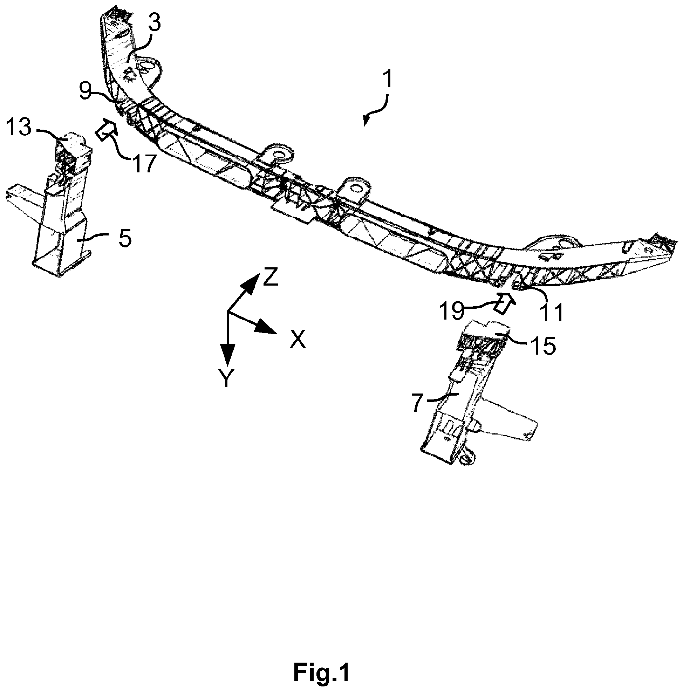

La figure 1 représente un module de face 1 avant comprenant une traverse 3, un premier 5 et un deuxième 7 montant latéral. Sur la figure 1, la traverse 3 et les montants latéraux 5, 7 sont séparés. La traverse 3 comprend un premier 9 et un deuxième 11 logements destinés à recevoir respectivement une première tête de fixation 13 du premier montant latéral 5 et une deuxième tête de fixation 15 du deuxième montant latéral 7. Les flèches 17 et 19 représentent la direction dans laquelle les têtes de fixation 13, 15 des montants latéraux 5, 7 viennent s'encastrer dans les logements 9, 11 de la traverse 3. En effet, les têtes de fixation 13, 15 et les logements 9, 11 présentent des formes complémentaires permettant l'insertion des têtes de fixation 13, 15 dans les logements 9, 11 jusqu'à l'encastrement complet.

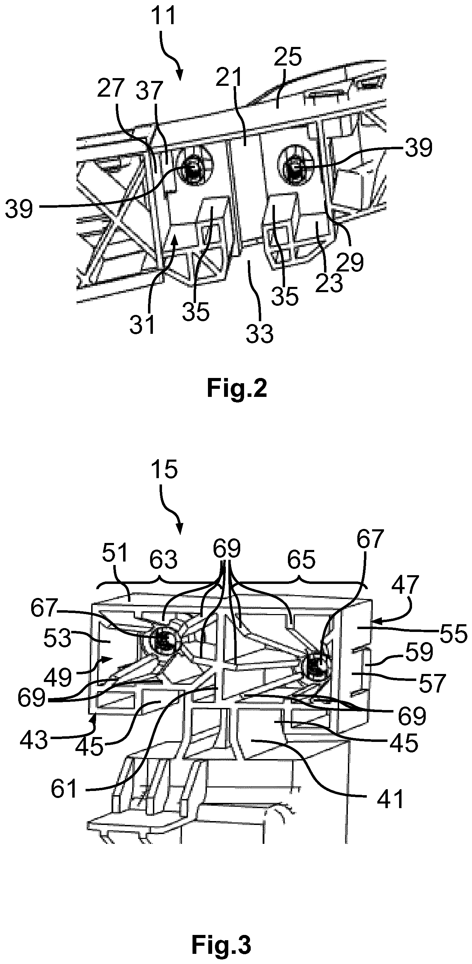

La liaison d'encastrement est obtenue à partir des formes spécifiques des têtes de fixation 13, 15 et des logements 9, 11 qui vont maintenant être décrits en détails à partir des figures 2 et 3.

La figure 2 représente le deuxième logement 11 de la traverse 3. Le premier 9 et le deuxième 11 logement sont symétriques par rapport à un plan passant par le centre de la traverse et perpendiculaire à la traverse, de sorte que seul le deuxième logement 11 sera décrit. Le deuxième logement 11 comprend un fond 21, une paroi inférieure 23, une paroi supérieure 25, une première paroi latérale 27, une deuxième paroi latérale 29 et une face d'entrée 31 délimitée par l'extrémité des parois latérales 27, 29, inférieure 23 et supérieure 25 opposée au fond 21 du logement 11. La paroi inférieure 23 comprend une ouverture centrale 33 qui s'étend entre la face d'entrée 31 et le fond 21 du logement 11. La paroi inférieure 23 comprend également deux saillies 35 de forme parallélépipédique de section sensiblement rectangulaire qui s'étendent entre la face d'entrée 31 et le fond 21 du logement 11. Les saillies 35 sont positionnées de part et d'autre de l'ouverture centrale 33. Les saillies 35 peuvent avoir des hauteurs différentes pour servir de détrompeur et assurer que c'est le montant latéral 7 adéquat (gauche ou droit) et dans le sens adéquat qui est introduit dans le logement 11. Le logement 11 comprend également des emplacements latéraux 37 sous la forme de fentes situées sur les paroi latérales près du fond 21 du logement 11. Le fond du logement comprend deux trous 39.

Alternativement, la paroi inférieure 23 peut comprend une seule saillie 35 ou un nombre de saillies 35 supérieur à deux. La taille et la section des saillies 35 peuvent également être différentes, par exemple une section de forme triangulaire ou en losange voire circulaire.

La figure 3 représente la deuxième tête de fixation 15 du deuxième montant latéral 7 (la première tête de fixation 13 du premier montant latéral 5 est symétrique à la deuxième tête de fixation 15) qui présente une forme générale de T, la base 41 du T étant fixée sur une paroi inférieure 43. La forme de la tête de fixation 15 est complémentaire de celle du logement 11 de sorte que la paroi inférieure 43 comprend deux rainures 45 de forme parallélépipédique situées de part et d'autre de la base 41 du T. La tête de fixation 15 comprend également une face avant 47, une face arrière 49, une paroi supérieure 51 et deux parois latérales 53 et 55. Les parois latérales 53 et 55 comprennent une lame flexible 57 qui s'étend vers la face avant 47 et sur laquelle est positionnée une protubérance externe 59 destinée à venir se loger dans un emplacement latéral 37 du logement 11 pour former des moyens d'encliquetage entre la tête de fixation et le logement 11. Le nombre et le positionnement des moyens d'encliquetage peut varier, par exemple une seule lame flexible 57 ou un nombre supérieur à deux lames flexibles 57 peu(ven)t être utiliser et les lames flexibles 57 peuvent également être positionnées sur la paroi supérieure 51 ou la paroi inférieure 43.

La tête de fixation 15 a une structure creuse ouverte du côté de la face arrière 49. La partie creuse est séparée en deux parties 63 et 65 par une paroi centrale interne 61. La face avant comprend deux trous 67 situés sensiblement au centre de chacune des parties 63 et 65. La tête de fixation 15 comprend également des nervures internes 69 de renfort qui s'étendent depuis les trous 67 de la face avant 47 jusqu'à la face arrière 49. Le nombre, la forme et la taille des nervures 69 peut varier en fonction de la rigidité recherchée. De plus, la hauteur des nervures 69 peut diminuer entre la face avant 47 et la face arrière 49 de manière à faciliter l'accès aux trous, notamment pour positionner une tête de vis ou un boulon.

Par ailleurs, la section des logements 9,11 diminuent entre la face d'entrée 31 et le fond 21, de même que la section des têtes de fixation 13, 15 diminuent entre la face arrière 49 et la face avant 47 de manière à faciliter l'insertion des têtes de fixation 13, 15 dans les logements 9, 11 et à permettre de réaliser un ajustement et un encastrement des têtes de fixation 13, 15 dans les logements 9, 11 même lorsque les cotes des pièces varient, ce qui permet de réduire les exigences concernant les dimensions des tête de fixation 13, 15 et des logements 9, 11 et ainsi de réduire les coûts de production. La diminution de la section est par exemple obtenue par des parois (latérales, supérieures et inférieures) inclinées par rapport à la direction d'encastrement. L'angle d'inclinaison est par exemple compris entre 5 et 20°.

Les modes de réalisation des logements 9, 11 et des têtes de fixation 13, 15 ne se limitent pas aux mode de réalisation des figures 2 et 3 mais peuvent avoir des formes différentes permettant le maintien de la traverse 3 sur les montants latéraux 5, 7 dans toutes les directions. Par ailleurs, les ensembles complémentaires comme les rainures 45 et les saillies 35 ou les protubérances 59 et les emplacements 37, ces éléments peuvent être positionnés indifféremment sur les montants latéraux 5, 7 ou la traverse 3. Par exemple, les rainures 45 peuvent être positionnées sur la traverse 3 (les saillies 35 sont alors positionnées sur la tête de fixation 13, 15 des montants 5, 7) et les lames flexibles 57 et les protubérances 59 peuvent être positionnées sur le logement 9, 11 de la traverse 3 (les emplacements 37 sont alors positionnées sur la tête de fixation 13, 15 des montants 5, 7).

La traverse 3 et les montants latéraux 5, 7 sont réalisés en matières plastiques, par exemple en polypropylène avec 30% de fibre de verre (PPGF30). Ainsi, les montants 5, 7 et la traverse 3 peut être moulés.

L'assemblage des montants latéraux 5, 7 sur la traverse 3 est donc réalisé en insérant les têtes de fixation 13, 15 des montants latéraux 5, 7 dans les logements 9, 11 de la traverse 3 comme représenté sur la figure 1 par les flèches 17 et 19. Lors de l'introduction de la tête de fixation 15, 17, La base 41 de la tête de fixation 15, 17 vient s'introduire dans l'ouverture centrale 33, les rainures 45 viennent glisser sur les saillies 35 et les protubérances externes 59 viennent en contact avec les parois latérales 27, 29 du logement 9, 11, ce qui provoque la déformation des lames flexibles 57 vers l'intérieur de la tête de fixation 13, 15. La tête de fixation 13, 15 se déplace alors jusqu'à ce que la tête de fixation 13, 15 atteigne le fond 21 du logement. La face avant 47 de la tête de fixation 13, 15 est alors en contact avec le fond 21 du logement 9, 11. Les protubérances externes 59 des lames flexibles 57 viennent alors les emplacements latéraux 37 ce qui permet aux lames flexibles 57 de revenir vers l'extérieur contre la paroi latérale 27, 29 du logement 11. Les trous 67 de la face avant 47 de la tête de fixation 13, 15 viennent en regard des trous 39 du fond 21 du logement 11. Lorsque la tête de fixation 13, 15 est positionnée au fond du logement 21, il y a encastrement de la tête de fixation 13, 15 dans le logement 9, 11 de sorte que la traverse 3 est liée au montants latéraux 5, 7 dans toutes les directions. En effet, les parois supérieures 25, 51 et inférieures 23, 43 bloquent un déplacement selon l'axe Y, les parois latérales 27, 29, 53, 55 et les ensembles saillie 35-rainure 45 bloquent un déplacement selon l'axe X et les moyens d'encliquetage (ensemble lame flexible 57-protubérance 59-emplacement 37) bloquent un déplacement selon l'axe Z.

Ainsi, la fixation entre les montants 5, 7 et la traverse 3 ne demande pas d'équipement de montage ou d'outil particulier et peut être réalisée simplement par un opérateur. Des vis de fixation peuvent également être ajoutées au niveau de trous 39, 67 pour renforcer le maintien selon l'axe Z. Cependant, ces vis restent optionnelles puisque les contraintes selon l'axe Z sont assez faibles et que le maintien est déjà assuré par les moyens d'encliquetage.

Alternativement, les logements 9, 11 et les têtes de fixation 13, 15 peuvent ne pas comprendre de moyens d'encliquetage, l'encastrement des têtes de fixation 13, 15 dans les logements 9, 11 permettant alors un pré-maintien entre les montants latéraux 5, 7 et la traverse 3 de manière à permettre à un opérateur de positionner facilement les vis de fixation dans les trous 39, 69 pour fixer les montants latéraux 5, 7 et la traverse 3 dans la direction de l'axe Z.

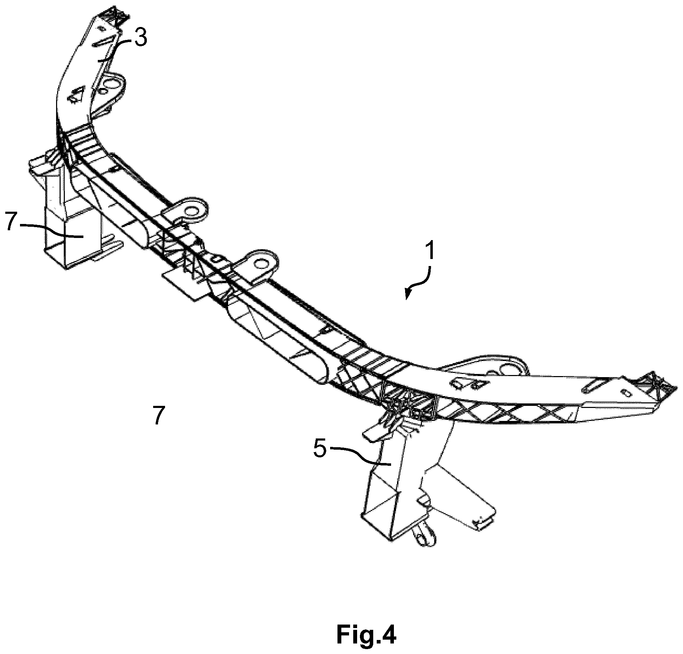

La figure 4 représente l'ensemble comprenant la traverse 3 et les montants latéraux 5, 7 à l'état assemblé. La traverse 3 est destinée à s'étendre sur la largeur du véhicule et les montants latéraux 5, 7 sont placés de manière symétriques de part et d'autre de la traverse 3. La traverse 3 a par exemple une longueur de 1,80 mètre et les montants latéraux 5, 7 sont espacés de 1,20 mètre. Une fois la traverse 3 et les montants 5, 7 assemblés, les divers éléments de la face avant du véhicule (radiateur, projecteurs, clignotants) peuvent alors être montés sur la traverse 3 pour former la face avant. Les montants latéraux 5, 7 sont ensuite fixés sur la châssis, par exemple via des vis de fixation et la traverse3 est fixée aux doublures latérales du véhicule.

Si cela est nécessaire, il est également envisageable de rajouter des logements 9, 11 sur les montants latéraux 5, 7 pour venir fixer une autre traverse 3, par exemple sur la partie basse des montants latéraux 5, 7. La fixation de la deuxième traverse 3 se faisant alors de la même manière que la première traverse 3.

Ainsi, le module de face avant 1 selon la présente invention permet de limiter le nombre d'éléments à assembler pour obtenir le module 1 tout en facilitant le transport par rapport à un module réalisé d'une seule pièce. De plus, la liaison d'encastrement obtenue par la combinaison tête de fixation-logement complémentaire comprenant des ensembles de saillies et rainures pour bloquer les mouvements latéraux et des moyens d'encliquetage permettant de bloquer les mouvement avant-arrière permet un assemblage simple et sans outil particulier du module de face avant. De plus, le fait d'avoir des montants latéraux 5, 7 séparés de la traverse 3 permet de pouvoir modifier la forme des montants 5, 7, par exemple pour adapter le module de face avant à un autre véhicule, sans avoir besoin de modifier le moule de la traverse 3 ce qui permet de réduire les coûts. La variation de section des têtes de fixation 13, 15 et des logements 9, 11 permet également de faciliter l'assemblage et d'obtenir un bon ajustement des éléments même lorsque leurs cotes diffèrent légèrement.

## Revendications

1. Module de face avant (1) de véhicule automobile comprenant :
- deux montants latéraux (5, 7) aptes à être fixés au châssis du véhicule,
- au moins une traverse (3) apte à être fixée sur les montants latéraux (5, 7) pour s'étendre selon la largeur du véhicule,
les montants latéraux (5, 7) comprenant une tête de fixation (13, 15) apte à venir s'encastrer dans un logement (9, 11) complémentaire de la traverse (3),
**caractérisé en ce que** la tête de fixation (13, 15) comprend une face avant (47) et une face arrière (49), le logement (9, 11) de la traverse (3) comprend une face d'entrée (31) et un fond (21) et dans lequel la section de la tête de fixation (13, 15) décroît entre sa face arrière (49) et sa face avant (47) de même que la section du logement (9, 11) décroît entre sa face d'entrée (31) et son fond (21).

2. Module (1) selon la revendication 1 dans lequel la diminution de section est obtenue par des parois inclinées par rapport à la direction d'encastrement dont l'angle d'inclinaison est compris entre 5 et 20°.

3. Module (1) selon l'une des revendications précédentes dans lequel la tête de fixation (13, 15) et le logement (9, 11) comprennent des moyens d'encliquetage (37, 57, 59) aptes à bloquer le déplacement relatif de la traverse (3) et du montant latéral (5, 7) dans la direction d'encastrement.

4. Module (1) selon la revendication 3 dans lequel la tête de fixation (13, 15) comprend une lame flexible (57) comprenant une protubérance externe (59) et le logement (9, 11) comprend un emplacement complémentaire (37) de sorte que la protubérance externe (59) vient dans l'emplacement complémentaire (37) lors de l'encastrement de tête de fixation (13, 15) dans le logement (9, 11).

5. Module (1) selon l'une des revendications précédentes dans lequel la tête de fixation (13, 15) et le logement (9, 11) comprennent une saillie (35) et une rainure complémentaire (45) qui s'étendent, pour l'une, de la face avant (47) à la face arrière (49) de la tête de fixation (13, 15) et, pour l'autre, de la face d'entrée (31) au fond (21) du logement (9, 11).

6. Module (1) selon l'une des revendications précédentes dans lequel la tête de fixation (13, 15) d'un montant latéral (5, 7) a une forme générale de T et le logement (9, 11) de la traverse (3) comprend une paroi inférieure (23), ladite paroi inférieure (23) comprenant une ouverture centrale (33) qui s'étend entre la face d'entrée (31) et le fond (21) du logement (9, 11) et dans laquelle vient s'insérer la base (41) du T de la tête de fixation (13, 15) lors de l'encastrement de la tête de fixation (13, 15) dans le logement (9, 11).

7. Module (1) selon les revendications 5 et 6 dans lequel la saillie (35) est située sur la paroi inférieure (23) du logement (9, 11) au bord de l'ouverture centrale (33).

8. Module (1) selon la revendication 7 dans laquelle la paroi inférieure (23) comprend deux saillies (35) de forme parallélépipédique et situées de part et d'autre de l'ouverture centrale (33).

9. Module (1) selon l'une des revendications précédentes dans lequel la tête de fixation (13, 15) comprend une face avant (47) et une face arrière (49) et dans lequel la tête de fixation (13, 15) comprend une structure creuse ouverte sur sa face arrière (49).

10. Module (1) selon la revendication 9 dans lequel la tête de fixation (13, 15) comprend des nervures de renfort (69) qui s'étendent entre la face avant (47) et la face arrière (49) de la tête de fixation (15, 17).

11. Module (1) selon l'une des revendications précédentes dans lequel le fond (21) du logement (9, 11) et la tête de fixation (13, 15) comprennent au moins un trou (39, 69) apte à recevoir un élément de fixation, le trou (69) de la tête de fixation (13, 15) venant en regard du trou (39) du fond (21) du logement (9, 11) lorsque la tête de fixation (13, 15) est encastrée dans le logement (21).

## Patentansprüche

1. Frontendmodul (1) eines Kraftfahrzeugs, das umfasst:
- zwei seitliche Stützen (5, 7), die am Rahmen des Fahrzeugs befestigt werden können,
- mindestens einen Querträger (3), der an den seitlichen Stützen (5, 7) befestigt werden kann, um sich gemäß der Breite des Fahrzeugs zu erstrecken,
wobei die seitlichen Stützen (5, 7) einen Befestigungskopf (13, 15) umfassen, der in eine komplementäre Aufnahme (9, 11) des Querträgers (3) eingebaut werden kann,
**dadurch gekennzeichnet, dass** der Befestigungskopf (13, 15) eine Vorderseite (47) und eine Rückseite (49) umfasst, die Aufnahme (9, 11) des Querträgers (3) eine Eingangsseite (31) und einen Boden (21) umfasst, und wobei der Querschnitt des Befestigungskopfs (13, 15) zwischen seiner Rückseite (49) und seiner Vorderseite (47) abnimmt wie auch der Querschnitt der Aufnahme (9, 11) zwischen ihrer Eingangsseite (31) und ihrem Boden (21) abnimmt.

2. Modul (1) nach Anspruch 1, wobei die Querschnittsverringerung durch bezüglich der Einbaurichtung geneigte Wände erhalten wird, deren Neigungswinkel zwischen 5 und 20° liegt.

3. Modul (1) nach einem der vorhergehenden Ansprüche, wobei der Befestigungskopf (13, 15) und die Aufnahme (9, 11) Einrasteinrichtungen (37, 57, 59) umfassen, die die relative Verschiebung des Querträgers (3) und der seitlichen Stütze (5, 7) in der Einbaurichtung blockieren können.

4. Modul (1) nach Anspruch 3, wobei der Befestigungskopf (13, 15) eine biegsame Lamelle (57) umfasst, die eine äußere Überhöhung (59) umfasst, und die Aufnahme (9, 11) eine komplementäre Einbaustelle (37) umfasst, so dass die äußere Überhöhung (59) beim Einbauen des Befestigungskopfs (13, 15) in die Aufnahme (9, 11) in die komplementäre Einbaustelle (37) kommt.

5. Modul (1) nach einem der vorhergehenden Ansprüche, wobei der Befestigungskopf (13, 15) und die Aufnahme (9, 11) einen Vorsprung (35) und eine komplementäre Rille (45) umfassen, von denen sich der eine von der Vorderseite (47) zur Rückseite (49) des Befestigungskopfs (13, 15) und der andere von der Eingangsseite (31) zum Boden (21) der Aufnahme (9, 11) erstreckt.

6. Modul (1) nach einem der vorhergehenden Ansprüche, wobei der Befestigungskopf (13, 15) einer seitlichen Stütze (5, 7) eine allgemeine Form eines T hat, und die Aufnahme (9, 11) des Querträgers (3) eine untere Wand (23) umfasst, wobei die untere Wand (23) eine zentrale Öffnung (33) umfassst, die sich zwischen der Eingangsseite (31) und dem Boden (21) der Aufnahme (9, 11) erstreckt und in die sich die Basis (41) des T des Befestigungskopfs (13, 15) beim Einbau des Befestigungskopfs (13, 15) in die Aufnahme (9, 11) einfügt.

7. Modul (1) nach den Ansprüchen 5 und 6, wobei der Vorsprung (35) sich auf der unteren Wand (23) der Aufnahme (9, 11) am Rand der zentralen Öffnung (33) befindet.

8. Modul (1) nach Anspruch 7, wobei die untere Wand (23) zwei Vorsprünge (35) parallelepipedischer Form umfasst, die sich zu beiden Seiten der zentralen Öffnung (33) befinden.

9. Modul (1) nach einem der vorhergehenden Ansprüche, wobei der Befestigungskopf (13, 15) eine Vorderseite (47) und eine Rückseite (49) umfasst, und wobei der Befestigungskopf (13, 15) eine an seiner Rückseite (49) offene vertiefte Struktur umfasst.

10. Modul (1) nach Anspruch 9, wobei der Befestigungskopf (13, 15) Verstärkungsrippen (69) umfasst, die sich zwischen der Vorderseite (47) und der Rückseite (49) des Befestigungskopfs (15, 17) erstrecken.

11. Modul (1) nach einem der vorhergehenden Ansprüche, wobei der Boden (21) der Aufnahme (9, 11) und der Befestigungskopf (13, 15) mindestens ein Loch (39, 69) umfassen, das ein Befestigungselement aufnehmen kann, wobei das Loch (69) des Befestigungskopfs (13, 15) vor das Loch (39) des Bodens (21) der Aufnahme (9, 11) kommt, wenn der Befestigungskopf (13, 15) in die Aufnahme (21) eingebaut wird.

## Claims

1. Front face module (1) of a motor vehicle comprising:
- two lateral uprights (5, 7) designed to be attached to the chassis of the vehicle,
- at least one cross member (3) designed to be attached to the lateral uprights (5, 7) to extend across the width of the vehicle,
the lateral uprights (5, 7) including an attachment head (13, 15) designed to be engaged in a matching seat (9, 11) in the cross member (3),
**characterized in that** the attachment head (13, 15) includes a front face (47) and a rear face (49), the seat (9, 11) in the cross member (3) includes an entry face (31) and a back (21), and wherein the section of the attachment head (13, 15) decreases between the rear face (49) of same and the front face (47) of same, and the section of the seat (9, 11) decreases between the entry face (31) of same and the back (21) of same.

2. Module (1) according to Claim 1, wherein the section is reduced using walls inclined in relation to the engagement direction, the angle of inclination of which is between 5° and 20°.

3. Module (1) according to one of the preceding claims, wherein the attachment head (13, 15) and the seat (9, 11) include locking means (37, 57, 59) designed to prevent the relative movement of the cross member (3) and the lateral upright (5, 7) in the engagement direction.

4. Module (1) according to Claim 3, wherein the attachment head (13, 15) includes a flexible blade (57) including an external protuberance (59) and the seat (9, 11) includes a matching space (37) such that the external protuberance (59) enters the matching space (37) when the attachment head (13, 15) is engaged in the seat (9, 11).

5. Module (1) according to one of the preceding claims, wherein the attachment head (13, 15) and the seat (9, 11) include a projection (35) and a matching slot (45), in which one extends from the front face (47) to the rear face (49) of the attachment head (13, 15) and the other extends from the entry face (31) to the back (21) of the seat (9, 11).

6. Module (1) according to one of the preceding claims, wherein the attachment head (13, 15) of a lateral upright (5, 7) is overall T-shaped and the seat (9, 11) in the cross member (3) has a lower wall (23), said lower wall (23) having a central opening (33) extending between the entry face (31) and the back (21) of the seat (9, 11), into which the base (41) of the T of the attachment head (13, 15) is inserted when the attachment head (13, 15) is engaged in the seat (9, 11) .

7. Module (1) according to Claims 5 and 6, wherein the projection (35) is located on the lower wall (23) of the seat (9, 11) at the edge of the central opening (33) .

8. Module (1) according to Claim 7, wherein the lower wall (23) includes two parallelepiped projections (35) located on either side of the central opening (33).

9. Module (1) according to one of the preceding claims, wherein the attachment head (13, 15) includes a front face (47) and a rear face (49), and in that the attachment head (13, 15) includes a hollow structure that is open on the rear face (49) of same.

10. Module (1) according to Claim 9, wherein the attachment head (13, 15) includes reinforcing ribs (69) that extend between the front face (47) and the rear face (49) of the attachment head (15, 17).

11. Module (1) according to one of the preceding claims, wherein the back (21) of the seat (9, 11) and the attachment head (13, 15) include at least one hole (39, 69) designed to receive an attachment element, the hole (69) of the attachment head (13, 15) facing the hole (39) in the back (21) of the seat (9, 11) when the attachment head (13, 15) is engaged in the seat (21).
